(19) Europäisches Patentamt
European Patent Office
Office européen des brevets

(11) **EP 2 058 935 A1**

(12) **EUROPEAN PATENT APPLICATION**
published in accordance with Art. 153(4) EPC

(43) Date of publication:
**13.05.2009 Bulletin 2009/20**

(51) Int Cl.:
***H02M 7/48*** *(2007.01)*

(21) Application number: **07806189.2**

(22) Date of filing: **22.08.2007**

(86) International application number:
**PCT/JP2007/066712**

(87) International publication number:
**WO 2008/023831 (28.02.2008 Gazette 2008/09)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.08.2006 JP 2006228058**

(71) Applicant: **TOYOTA JIDOSHA KABUSHIKI KAISHA**
**Aichi-ken, 471-8571 (JP)**

(72) Inventor: **ITO, Yuji**
**Aichi 471-8571 (JP)**

(74) Representative: **Kuhnen & Wacker**
**Patent- und Rechtsanwaltsbüro**
**Prinz-Ludwig-Strasse 40A**
**85354 Freising (DE)**

(54) **MOTOR DRIVE DEVICE**

(57)     A controller (30) determines a failure of an inverter (14) in response to detection of an excessive current in any one of IGBT elements of the inverter (14) during driving of a motor generator (MG1). The controller (30) sets the inverter (14) to a suspended state in response to the determination of the failure, and identifies a short-circuited phase based on a motor current (MCRT1) from a current sensor (24). The controller (30) simultaneously turns on two IGBT elements forming upper and lower arms of the short-circuited phase in a discharge process of a capacitor (C2) performed during stop control of a vehicle. Thus, the two IGBT elements are short-circuited because of a rapid increase in heat loss caused by an excessive short-circuit current. As a result, an excessive current at the inverter and power supply lines caused by a back electromotive force generated at the motor generator (MG1) when the vehicle is towed is suppressed.

FIG.1

**Description**

Technical Field

The present invention relates to a motor drive device, and in particular, to a motor drive device in which overheating caused by a short-circuit fault of a power converting device can be prevented.

Background Art

Recently, a hybrid vehicle and an electric vehicle are attracting attention as ecologically friendly vehicles. A hybrid vehicle has, as power sources, a DC power source, an inverter and a motor driven by the inverter, in addition to a conventional engine. That is, power is obtained by driving the engine and, in addition, the DC voltage from the DC power source is converted to an AC voltage by the inverter, the motor is rotated by the converted AC voltage, and whereby power is obtained.

An electric vehicle has a DC power source, an inverter and a motor driven by the inverter, as power sources.

In a motor drive device mounted on a hybrid vehicle or an electric vehicle as such, typically, when a failure such as a short-circuit fault of a switching element forming the inverter is detected, the inverter operation is stopped, in order to prevent overheating of the switching element caused by an excessive current flowing to the short-circuited switching element.

For example, Japanese Patent Laying-Open No. 2004-289903 discloses the art of detecting a ground fault of an inverter device and preventing destruction and the like of an inverter element.

According to this, the inverter is supplied with electric power from a vehicle-mounted battery, and controls driving of a vehicle driving motor. A common capacitor for pulse noise absorption is connected between a negative bus bar of the inverter connected on the negative electrode side of the vehicle-mounted battery and a ground potential. A short-circuit detector detects the occurrence of a ground fault, based on a terminal voltage of the common capacitor and a charging/discharging current. When a failure signal indicating the occurrence of a ground fault is output from the short-circuit detector, a motor control processing unit immediately turns off all switching elements of the inverter, so that the destruction of the element caused by a ground-fault current is prevented.

In a configuration where all switching elements of the inverter are turned off as in Japanese Patent Laying-Open No. 2004-289903, however, a short-circuit current may flow through the inside of the inverter and a wire harness (W/H) that is a conductive line connecting the neutral point of a motor to each phase of the inverter, due to a back electromotive force generated at the vehicle driving motor when the vehicle runs in an evacuation mode. The back electromotive force generated at the motor is proportional to the rotation speed of the motor. Therefore, as the rotation speed of the motor is increased, a current that exceeds a set current value defined by thermal limits and the like of the switching elements and the wire harness flows through the inverter and the conductive line, and these may be thermally destroyed.

These problems are more likely to occur especially when the vehicle runs in the limp mode, is suddenly stopped, and then is towed and carried to an automotive repair shop and the like. That is, when the vehicle is towed, it is more likely that the rotation speed of the motor becomes higher and the running time becomes relatively longer than those when the vehicle runs in the limp mode where power supply to a drive shaft is limited. As described above, when the vehicle is towed, a large back electromotive force is continuously generated at the motor. Therefore, the possibility that the inverter and the wire harness are brought to an excessive current state is increased.

Therefore, the present invention has been made to solve the above-described problems, and an object thereof is to provide a motor drive device in which an inverter and a conductive line can be protected from an excessive current caused by a short-circuit fault.

Disclosure of the Invention

According to the present invention, a motor drive device includes a multi-phase motor, a power source capable of supplying a DC voltage to first and second power supply lines, a power converting device performing power conversion between the first and second power supply lines and the multi-phase motor, and a controller controlling the power converting device such that an output of the multi-phase motor attains to a target output. The power converting device includes a plurality of arm circuits connected to coils of respective phases of the multi-phase motor via conductive lines, respectively. Each of the plurality of arm circuits has first and second switching elements connected in series between the first and second power supply lines, with a connecting point to the coils of respective phases interposed therebetween. In response to detection of a short-circuited arm circuit from the plurality of arm circuits, the controller fixes the first and second switching of the short-circuited arm circuit to a conducting state.

According to the above motor drive device, an excessive current at the power converting device and the conductive lines caused by a back electromotive force generated at the multi-phase motor can be prevented.

Preferably, the motor drive device further includes a capacitive element connected between the first and second power supply lines, and smoothing the DC voltage and inputting the DC voltage to the power converting device. The controller sets the first and second switching elements of the short-circuited arm circuit to the conducting state and causes discharge of electric power stored in the capacitive element.

According to the above motor drive device, the first and second switching elements of the short-circuited arm circuit can be readily fixed to the conducting state.

Preferably, the short-circuit detecting unit detects the short-circuited arm circuit, based on a magnitude of currents flowing through the coils of respective phases.

According to the above motor drive device, the short-circuited arm circuit can be readily identified.

Preferably, the multi-phase motor is coupled to a drive shaft of a vehicle.

According to the above motor drive device, an excessive current at the power converting device and the conductive lines caused by a back electromotive force generated at the multi-phase motor by a rotational force of the drive shaft can be prevented.

Preferably, the multi-phase motor is coupled to an internal combustion engine, and the motor drive device further includes a vehicle driving motor coupled to a drive shaft of a vehicle, and a power split device coupling an output shaft of the internal combustion engine, an output shaft of the multi-phase motor and the drive shaft to one another.

According to the above motor drive device, an excessive current at the power converting device and the conductive lines caused by a back electromotive force generated at the multi-phase motor rotating with rotation of the vehicle driving motor can be prevented.

According to the present invention, in the motor drive device, the inverter and the conductive lines can be protected from an excessive current caused by a short-circuit fault of the inverter.

Brief Description of the Drawings

Fig. 1 is a schematic block diagram of a motor drive device according to an embodiment of the present invention.
Fig. 2 is a functional block diagram of a controller in Fig. 1.
Fig. 3 is an illustration showing a method of identifying a short-circuited phase of an inverter.
Fig. 4 shows a current route in a discharge process of a smoothing capacitor.
Fig. 5 shows a current route when upper and lower arms of the short-circuited phase are short-circuited.
Fig. 6 shows output waveforms of motor currents when the upper and lower arms of the short-circuited phase are short-circuited.
Fig. 7 is a flowchart illustrating drive control when the inverter is short-circuited according to the embodiment of the present invention.

Best Modes for Carrying Out the Invention

In the following, embodiments of the present invention will be described in detail with reference to the figures. In the figures, the same reference characters denote the same or corresponding portions.

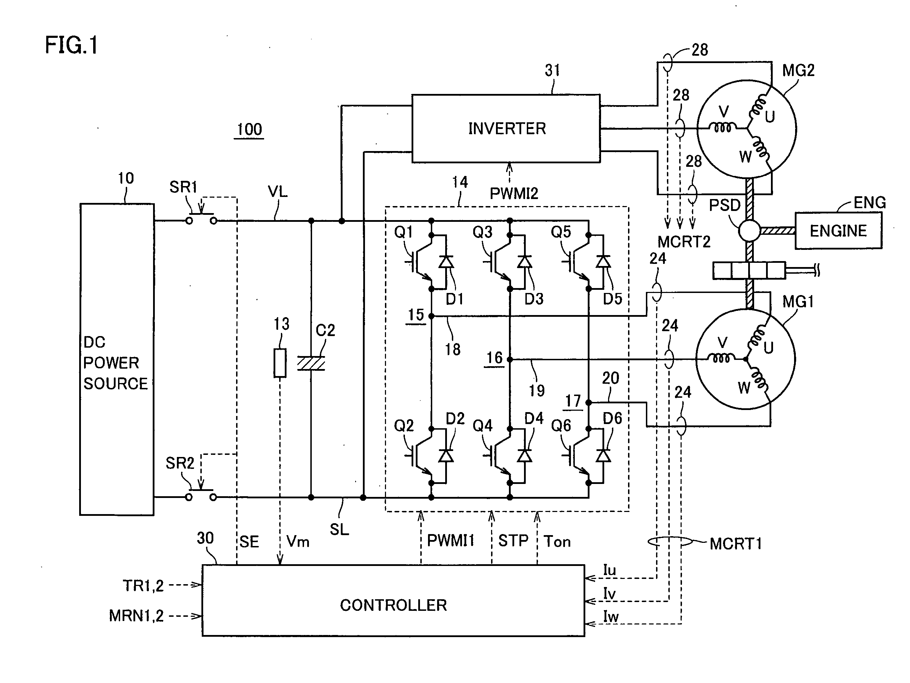

Fig. 1 is a schematic block diagram of a motor drive device according to an embodiment of the present invention.

Referring to Fig. 1, a motor drive device 100 includes a DC power source 10, a voltage sensor 13, system relays SR1 and SR2, a capacitor C2, inverters 14 and 31, current sensors 24 and 28, and a controller 30.

An engine ENG generates driving force using combustion energy of fuel such as gasoline as a source. The driving force generated by engine ENG is split to two routes by a power split device PSD as shown by thick oblique lines in Fig. 1. One route is for transmitting the force through a not-shown reduction device to a drive shaft for driving wheels. The other route is for transmitting the force to a motor generator MG1.

Motor generators MG1 and MG2 are formed of three-phase AC synchronous motors, which are driven by electric power stored in DC power source 10 and the driving force of engine ENG. Motor generator MG1 is a motor having a function of a generator driven by engine ENG, and it operates as an electric motor for engine ENG and is capable of starting an operation of engine ENG, for example. Motor generator MG2 is a driving motor for generating torque for driving the driving wheels of the vehicle.

DC power source 10 is configured to include a power storage device (not shown) and outputs a DC voltage between a power supply line VL and a ground line SL. For example, DC power source 10 can be configured to convert an output voltage of a secondary battery and output the converted voltage to power supply line VL and ground line SL by a combination of the secondary battery and a step-up and down converter. In this case, the step-up and down converter is configured to allow bidirectional power conversion, and a DC voltage between power supply line VL and ground line SL is converted to a charging voltage of the secondary battery.

System relay SR1 is connected between a positive electrode of DC power source 10 and power supply line VL, and system relay SR2 is connected between a negative electrode of DC power source 10 and ground line SL. System relays SR1 and SR2 are turned on/off in response to a signal SE from controller 30.

Smoothing capacitor C2 is connected between power supply line VL and ground line SL. Voltage sensor 13 detects a voltage Vm across opposite ends of capacitor C2 (which corresponds to an input voltage to inverters 14 and 31, and the same is applied in the following), and outputs the voltage to controller 30.

Inverter 14 includes a U-phase arm 15, a V-phase arm 16 and a W-phase arm 17. U-phase arm 15, V-phase arm 16 and W-phase arm 17 are provided in parallel between power supply line VL and ground line SL.

U-phase arm 15 includes series-connected IGBT (Insulated Gate Bipolar Transistor) elements Q1 and Q2. V-phase arm 16 includes series-connected IGBT elements Q3 and Q4. W-phase arm 17 includes series-connected IGBT elements Q5 and Q6. Further, between the collector and the emitter of IGBT elements Q1 to Q6, diodes D1 to D6 causing current flow from the emitter side to the collector side are connected, respectively.

The midpoint of each phase arm is connected to an end of each phase of coils of respective phases of motor generator MG1 via a conductive line (wire harness). That is, motor generator MG1 is a three-phase permanent magnet motor, having three coils of U-, V- and W-phases commonly connected at one end to the neutral point. The U-phase coil has its the other end connected to the midpoint between IGBT elements Q1 and Q2 via a conductive line 18, the V-phase coil has its the other end connected to the midpoint between IGBT elements Q3 and Q4 via a conductive line 19, and W-phase coil has its the other end connected to the midpoint between IGBT elements Q5 and Q6 via a conductive line 20. It is noted that the switching elements included in inverter 14 are not limited to IGBT elements Q1 to Q6, and they may be formed of other power elements such as MOSFETs.

Inverter 31 is configured similarly to inverter 14.

Inverter 14 converts the DC voltage output by DC power source 10 to a three-phase AC based on a signal PWMI1 from controller 30, and drives motor generator MG1. Consequently, motor generator MG1 is driven to generate the required torque designated by a torque command value TR1.

Further, at the time of regenerative braking of a hybrid vehicle having motor drive device 100 mounted thereon, inverter 14 converts the AC voltage generated by motor generator MG1 to a DC voltage based on signal PWMI1 from controller 30, and supplies the converted DC voltage to DC power source 10 through capacitor C2. The regenerative braking here includes braking with power regeneration in response to a foot brake operation by a driver driving the hybrid vehicle, as well as deceleration (or stopping of acceleration) while regenerating power by turning off the accelerator pedal during running while not operating the foot brake.

Inverter 31 1 converts the DC voltage output by DC power source 10 to a three-phase AC based on a signal PWMI2 from controller 30, and drives motor generator MG2. Consequently, motor generator MG1 is driven to generate the required torque designated by a torque command value TR2.

Further, at the time of regenerative braking of the hybrid vehicle having motor drive device 100 mounted thereon, inverter 31 converts the AC voltage generated by motor generator MG2 to a DC voltage based on signal PWMI2 from controller 30, and supplies the converted DC voltage to DC power source 10 through capacitor C2.

Current sensor 24 detects a current MCRT1 (Iu, Iv, Iw) flowing through motor generator MG1, and provides an output to controller 30. Current sensor 28 detects a current MCRT2 flowing through motor generator MG2, and provides an output to controller 30.

Controller 30 receives torque command values TR1 and TR2 and motor rotation speeds MRN1 and MRN2 from an external ECU (Electronic Control Unit), voltage Vm from voltage sensor 13, and motor currents MCRT1 and MCRT2 from current sensor 24. Then, controller 30 generates, based on output voltage Vm, torque command value TR1 and motor current MCRT1, signal PWMI1 for switching control of IGBT elements Q1 to Q6 of inverter 14 when inverter 14 drives motor generator MG2, and outputs generated signal PWMI1 to inverter 14.

Further, controller 30 generates, based on output voltage Vm, torque command value TR2 and motor current MCRT2, signal PWMI2 for switching control of IGBT elements Q1 to Q6 of inverter 31 when inverter 31 drives motor generator MG2, and outputs generated signal PWMI2 to inverter 31.

Further, controller 30 generates signal SE for turning on/off system relays SR1 and SR2, and outputs the signal to system relays SR1 and SR2.

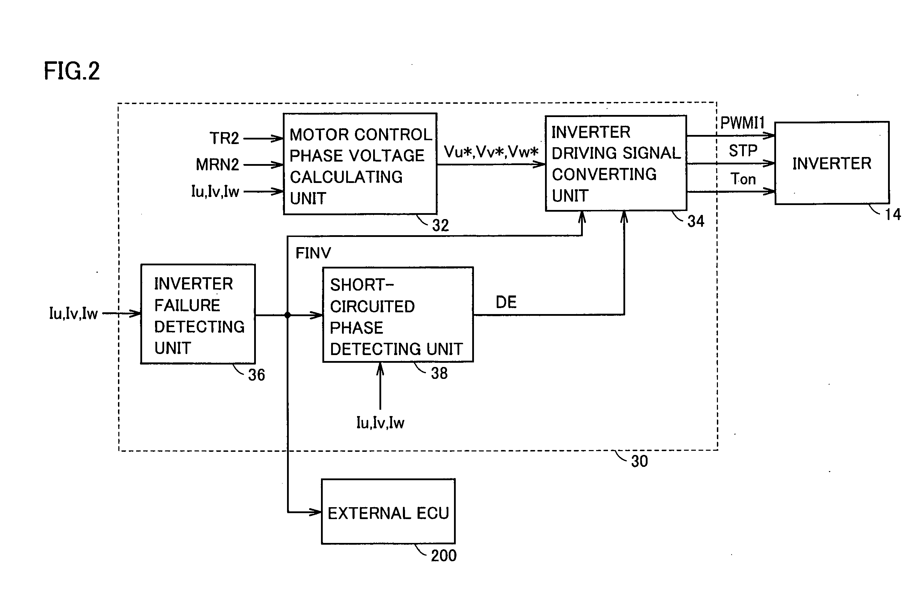

Fig. 2 is a functional block diagram of controller 30 in Fig. 1.

Referring to Fig. 2, controller 30 includes, as control means for inverter 14, a motor control phase voltage calculating unit 32, an inverter driving signal converting unit 34, an inverter failure detecting unit 36, and a short-circuited phase detecting unit 38. Though not shown, controller 30 further includes control means for inverter 31 having a configuration similar to that of Fig. 2.

Motor control phase voltage calculating unit 32 receives input voltage Vm to inverter 14 from voltage sensor 13, motor currents Iu, Iv and Iw flowing through respective phases of motor generator MG1 from current sensor 24, and torque command value TR1 from external ECU 200. Based on these input signals, motor control phase voltage calculating unit 32 calculates voltage amounts (hereinafter also referred to as voltage commands) Vu*, Vv* and Vw* to be applied to the coils of respective phases of motor generator MG2, and outputs the calculated results to inverter driving signal converting unit 34.

Inverter driving signal converting unit 34 generates signal PWMI1 that actually turns on/off each of IGBT elements Q1 to Q6 of inverter 14, based on voltage commands Vu*, Vv* and Vw* of the coils of respective phases from motor control phase voltage calculating unit 32, and outputs generated signal PWMI1 to each of IGBT elements Q1 to Q6.

Consequently, each of IGBT elements Q1 to Q6 is switching-controlled, and controls the current caused to flow to each phase of motor generator MG1 such that motor generator MG1 outputs the designated torque. In this manner, motor current MCRT1 is controlled and the motor torque in accordance with torque command value TR1 is output.

Inverter failure detecting unit 36 detects a failure of inverter 14 while driving of motor generator MG1 is controlled. The failure detection of inverter 14 is performed based on motor currents Iu, Iv and Iw of motor generator MG1 input from current sensor 24. Here, in response to detection of an excessive current in any one of the values detected by the current sensor, inverter failure detecting unit 36 determines a failure caused by a short-circuit fault of IGBT elements Q1 to Q6, and generates a signal FINV representing the determined result. Inverter failure detecting unit 36 outputs generated signal FINV to short-circuited phase detecting unit 38, inverter driving signal converting unit 34 and external ECU 200.

Receiving signal FINV from inverter failure detecting unit 3 6, inverter driving signal converting unit 34 generates a signal STP for stopping (off state) a switching operation of each of IGBT elements Q1 to Q6 of inverter 14, and outputs generated signal STP to IGBT elements Q1 to Q6. Consequently, inverter 14 is set to a suspended state.

Receiving signal FINV from inverter failure detecting unit 36, external ECU 200 causes the hybrid vehicle having motor drive device 100 mounted thereon to enter the running stop control.

Receiving signal FINV from inverter failure detecting unit 36, short-circuited phase detecting unit 38 identifies the phase in which a short-circuit fault occurred (hereinafter also referred to as a short-circuited phase), based on motor currents Iu, Iv and Iw from current sensor 24. Then, short-circuited phase detecting unit 38 generates a signal DE indicating the identified short-circuited phase, and outputs the signal to inverter driving signal converting unit 34.

Receiving signal DE from short-circuited phase detecting unit 38, inverter driving signal converting unit 34 generates, in a discharge process of capacitor C2 performed in a series of stop control of the vehicle by external ECU 200, a signal Ton for simultaneously turning on two IGBT elements forming the short-circuited phase by the method that will be described later, and outputs generated signal Ton to inverter 14. Consequently, the charge stored in capacitor C2 is consumed as a short-circuit current of the short-circuited phase. Typically, a capacitor having a large capacitance is used as smoothing capacitor C2 because of a high voltage of DC power source 10. Therefore, in the discharge of capacitor C2, a large short-circuit current flows through the short-circuited phase in a short time, which leads to the short-circuit fault of the two IGBT elements because of a rapid increase in heat loss.

As described above, the motor drive device according to the present invention is **characterized in that,** in response to detection of a failure of the inverter, the short-circuited phase is identified from the three-phase arms forming the inverter and, in addition, the upper and lower arms of the identified short-circuited phase are fixed to a conducting state.

Since the motor drive device according to the present invention has the above-described characteristic, overheating of inverter 14 and conductive lines 18 to 20 by a back electromotive force induced at motor generator MG1 after the failure detection of inverter 14 can be prevented in the vehicle having motor drive device 100 mounted thereon. The above-described characteristic will be described in detail hereinafter.

First, a method of identifying a short-circuited phase of the inverter by the motor drive device of the present invention will be described.

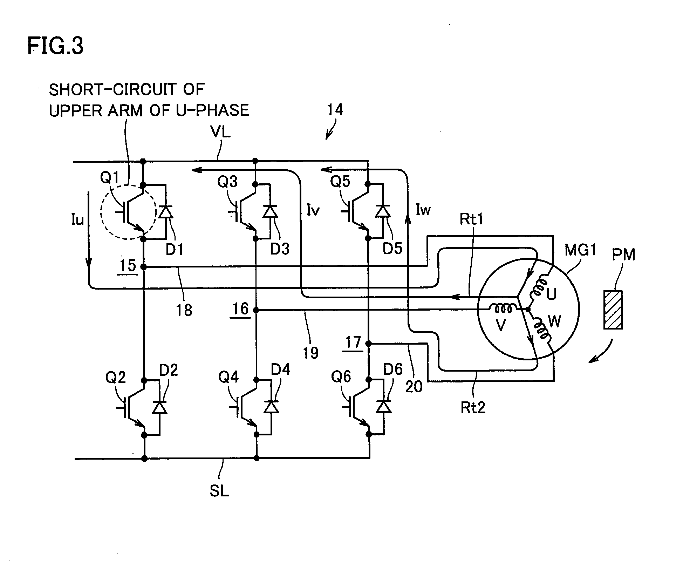

Fig. 3 is an illustration showing the method of identifying a short-circuited phase of inverter 14.

Referring to Fig. 3, assume that U-phase arm 15 (for example, IGBT element Q1) failed because of a short-circuit, among U-, V- and W-phase arms 15 to 17 forming inverter 14.

At this time, in response to detection of an excessive current by the current sensor included in IGBT element Q1, inverter 14 is set to a suspended state. Then, the vehicle runs in the evacuation mode in which motor generator MG2 serves as a driving source within a performance range determined by the amount of charge of DC power source 10, so that the vehicle is retreated to a place where the vehicle does not obstruct other vehicles, pedestrians and the like. Thereafter, the vehicle is towed and carried to an automotive repair shop and the like.

In these running in the evacuation mode as well as tow and carriage, motor generator MG1 is also rotated with rotation of motor generator MG2 because motor generator MG1 and motor generator MG2 are coupled to each other with power split device PSD interposed therebetween.

As shown in Fig. 3, a magnet PM attached to a rotor (not shown) of motor generator MG1 is rotated with the rotation of motor generator MG1, so that a back electromotive voltage is generated at the coils of respective phases of motor generator MG1.

At this time, in the case where IGBT element Q1 (upper arm) of U-phase arm 15 is short-circuited as shown in Fig. 3, a short-circuit route through U-phase arm 15 that is a short-circuited phase is formed, even if the switching operation of each of IGBT elements Q1 to Q6 is controlled to be stopped.

Specifically, when power supply line VL of inverter 14 is conducted to the midpoint of U-phase arm 15 because of the short-circuit of IGBT element Q1, U-phase motor current Iu flows through a route from power supply line VL through the midpoint of U-phase arm 15 and conductive line 18 to the U-phase coil of motor generator MG1. U-phase motor current Iu is branched at the neutral point of motor generator MG1 to a first route Rt1 from the V-phase coil through conductive line 19, the midpoint of V-phase arm 16 and diode D3 to power supply line VL, and a second route Rt2 from the W-phase coil through conductive line 20, the midpoint of W-phase arm 17 and diode D5 to power supply line VL.

In such a manner, in U-, V- and W-phase arms 15 to 17, the short-circuited upper arm of U-phase arm 15 and diodes D3 and D5 of V- and W-phase arms 16 and 17 form a closed circuit, with motor generator MG1 interposed therebetween. In the closed circuit, the relation represented by the following equation (1) holds among three-phase motor currents Iu, Iv and Iw:

$$|Iu| = |Iv| + |Iw| \qquad\qquad (1)$$

According to this, a short-circuit current corresponding to the sum of the magnitude of V-phase motor current Iv and W-phase motor current Iw flows through the closed circuit. The back electromotive voltage generated at motor generator MG1 is proportional to the rotation speed of motor generator MG1. Therefore, as the rotation speed of motor generator MG2 is increased, the back electromotive voltage generated at motor generator MG1 is also increased and the short-circuit current flowing through inverter 14 and conductive lines 18 to 20 is also increased. The excessive short-circuit current may lead to thermal destruction of the inverter and the conductive lines because of the generated high temperature that exceeds the heat-resistant temperature of the inverter and the conductive lines.

Therefore, the embodiment of the present invention has a configuration where it is determined whether the magnitude of each of motor currents Iu, Iv and Iw detected at current sensor 24 exceeds a prescribed threshold value I_std or not. According to the present configuration, in response to determination that the magnitude of any one of motor currents Iu, Iv and Iw exceeds prescribed threshold value I_std, the phase corresponding to the motor current is identified as a short-circuited phase. It is noted that prescribed threshold value I_std is set to a current value higher than a motor current detected when motor generator MG1 outputs the maximum torque that motor generator MG1 can output.

Next, a method of fixing the upper and lower arms of the short-circuited phase to the conducting state in the motor drive device of the present invention will be described.

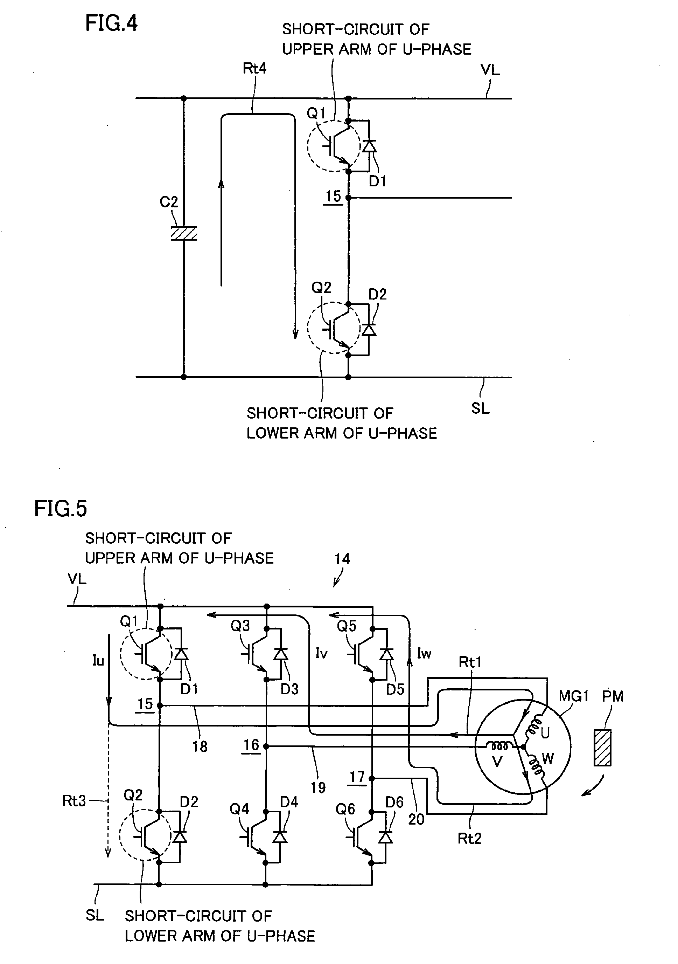

Fig. 4 shows a current route in the discharge process of capacitor C2. It is noted that the case where IGBT element Q1 (upper arm) of U-phase arm 15 is short-circuited is assumed as in Fig. 3.

In a series of stop control of the vehicle by external ECU 200, the discharge process of capacitor C2 is performed when the DC voltage from DC power source 10 is shut off. The DC voltage is shut off by generating signal SE for turning off system relays SR1 and SR2 and outputting the generated signal to system relays SR1 and SR2 by controller 30.

As described above, in the motor drive device according to the present invention, the upper and lower arms (IGBT elements Q1 and Q2) of U-phase arm 15 that is the short-circuited phase are simultaneously turned on by signal Ton from controller 30 in this discharge process of capacitor C2. Consequently, the charge stored in capacitor C2 is consumed as the short-circuit current of IGBT elements Q1 and Q2 along a route Rt4 in the figure. Since the magnitude of the short-circuit current here is large in proportion to a large capacitance of capacitor C2, heat loss generated at IGBT elements Q1 and Q2 is rapidly increased. IGBT elements Q1 and Q2 are thermally destroyed and short-circuited, and as a result, IGBT elements Q1 and Q2 are fixed to the conducting state.

In such a manner, the upper and lower arms of the short-circuited phase are fixed to the conducting state, so that the short-circuit current flowing through inverter 14 and conductive lines 18 to 20 by the back electromotive voltage generated at motor generator MG1 can be reduced when the vehicle is towed hereafter.

Specifically, as shown in Fig. 5, in the case where the upper arm (IGBT element Q1) and the lower arm (IGBT element Q2) of U-phase arm 15 are short-circuited, a new route Rt3 from power supply line VL through the midpoint of U-phase arm 15 to ground line SL is formed as the route for U-phase motor current Iu, in addition to routes Rt1 and Rt2 described above. Consequently, the short-circuit current flowing through the closed circuit formed between the upper arm of U-phase arm 15 and diodes D3 and D5 of V- and W-phase arms 16 and 17 is reduced.

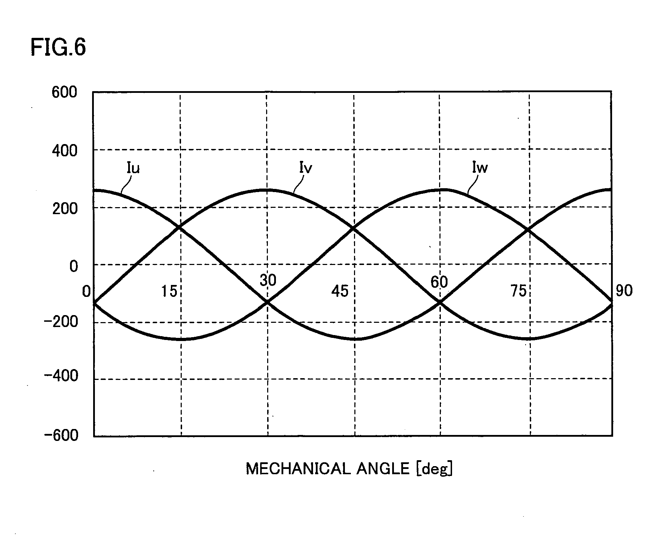

Fig. 6 shows output waveforms of the motor currents when the upper and lower arms of the short-circuited phase (U-phase arm 15) are short-circuited. It is noted that the output waveforms in Fig. 6 are obtained from a simulation of motor currents Iu, Iv and Iw induced when motor generator MG1 is rotated at a prescribed rotation speed in the circuit configuration shown in Fig. 5.

As is clear from Fig. 6, motor currents Iu, Iv and Iw show AC waveforms having substantially the same amplitudes. It is noted that the fact that the amplitudes of the motor currents hardly change even if the rotation speed of motor generator MG1 is increased has been obtained from a result of the calculation. Therefore, overheating of the inverter and the conductive lines caused by an excessive short-circuit current as a result of a short-circuit fault within the inverter when the vehicle is towed can be prevented.

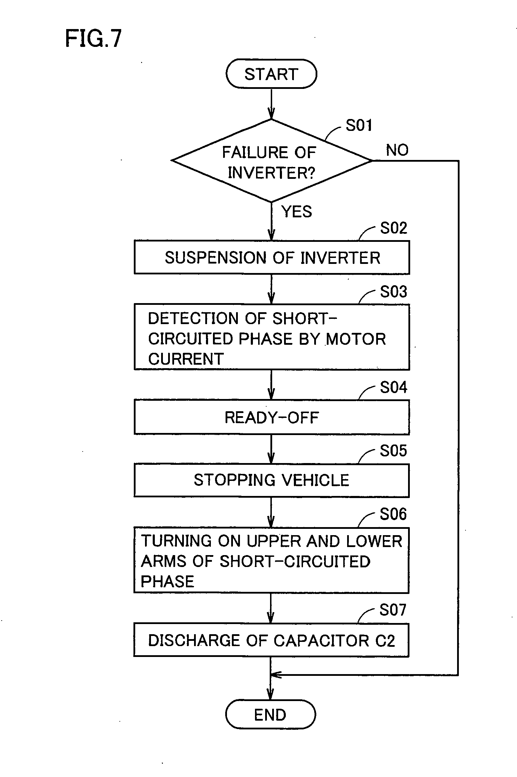

Fig. 7 is a flowchart illustrating drive control when the inverter is short-circuited according to the embodiment of the present invention.

Referring to Fig. 7, while driving of motor generator MG1 is controlled, inverter failure detecting unit 36 detects a failure generated at inverter 14, based on the values of motor currents Iu, Iv and Iw detected by current sensor 24 (step S01). Here, in response to detection of an excessive current in any one of the values detected by current sensor 24, inverter failure detecting unit 36 determines a failure caused by a short-circuit fault of IGBT elements Q1 to Q6, and generates signal FINV representing the determined result. Generated signal FINV is output to inverter driving signal converting unit 34, short-circuited phase detecting unit 38 and external ECU 200, respectively.

Receiving signal FINV, inverter driving signal converting unit 34 generates signal STP for stopping the switching operation of each of IGBT elements Q1 to Q6 of inverter 14 and outputs the generated signal to inverter 14 in order to protect inverter 14 and conductive lines 18 to 20 from the excessive current. Consequently, inverter 14 is set to a suspended state (step S02).

Next, in response to reception of signal FINV, short-circuited phase detecting unit 38 identifies the short-circuited phase based on motor currents Iu, Iv and Iw from current sensor 24 by the method described above (step S03). Short-circuited phase detecting unit 38 generates signal DE indicating the identified short-circuited phase, and outputs the signal to inverter driving signal converting unit 34.

In response to reception of signal FINV, the stop control of the vehicle is performed in external ECU 200. At this time, external ECU 200 prohibits the running of the vehicle by stopping (off state) an output of permission for the running of the vehicle, that is, "READY" to display means (step S04). Then, the vehicle runs in the evacuation mode in which motor generator MG2 serves as a driving source, so that the vehicle is retreated to a place where the vehicle does not obstruct other vehicles, pedestrians and the like. Thereafter, the vehicle is stopped (step S05).

Furthermore, when the DC voltage from DC power source 10 is shut off, the discharge process of capacitor C2 is performed. At this time, controller 30 generates signal SE for turning off system relays SR1 and SR2, and outputs the generated signal to system relays SR1 and SR2. In addition, inverter driving signal converting unit 34 within controller 30 generates signal Ton for simultaneously turning on the two IGBT elements forming the upper and lower arms of the short-circuited phase specified by signal DE, and outputs the generated signal to inverter 14 (step S06).

Consequently, the charge stored in capacitor C2 is consumed as the short-circuit current of the two IGBT elements turned on (step S07). The two IGBT elements are thermally destroyed and short-circuited because of a rapid increase in heat loss.

The upper and lower arms of the short-circuited phase are fixed to the conducting state, so that the flow of the excessive short-circuit current through the inside of the inverter is suppressed when the vehicle is towed after step S07. As a result, the inverter and the conductive lines can be protected from overheating.

Although the configuration where the IGBT elements of the short-circuited phase are short-circuited in the discharge process of capacitor C2 is described in the present embodiment, the present invention may have a configuration where signal Ton for simultaneously turning on the IGBT elements is continuously output from controller 30.

Furthermore, although the motor drive device in the hybrid vehicle including two motors coupled to each other by the power split device is illustrated in the present embodiment, the present invention is not limited to application to such a type. The present invention is also applicable to a motor drive device in an electrically-driven vehicle including, for example, a running driving motor.

It should be understood that the embodiments disclosed herein are illustrative and not limitative in any respect. The scope of the present invention is defined by the terms of the claims, rather than the description above, and is intended to include any modifications within the scope and meaning equivalent to the terms of the claims.

Industrial Applicability

The present invention can be employed in a motor drive device mounted on a hybrid vehicle or an electric vehicle.

**Claims**

1. A motor drive device, comprising:

   a multi-phase motor;
   a power source capable of supplying a DC voltage to first and second power supply lines;
   a power converting device performing power conversion between said first and second power supply lines and said multi-phase motor; and

a controller controlling said power converting device such that an output of said multi-phase motor attains to a target output,

said power converting device including a plurality of arm circuits connected to coils of respective phases of said multi-phase motor via conductive lines, respectively,

each of said plurality of arm circuits having first and second switching elements connected in series between said first and second power supply lines, with a connecting point to said coils of respective phases interposed therebetween, and

in response to detection of a short-circuited arm circuit from said plurality of arm circuits, said controller fixing said first and second switching of said short-circuited arm circuit to a conducting state.

2. The motor drive device according to claim 1, further comprising:

a capacitive element connected between said first and second power supply lines, and smoothing said DC voltage and inputting said DC voltage to said power converting device, wherein

said controller sets said first and second switching elements of said short-circuited arm circuit to the conducting state and causes discharge of electric power stored in said capacitive element.

3. The motor drive device according to claim 2, wherein
said short-circuit detecting unit detects said short-circuited arm circuit, based on a magnitude of currents flowing through said coils of respective phases.

4. The motor drive device according to any one of claims 1 to 3, wherein
said multi-phase motor is coupled to a drive shaft of a vehicle.

5. The motor drive device according to any one of claims 1 to 3, wherein
said multi-phase motor is coupled to an internal combustion engine, and
said motor drive device further comprises:

a vehicle driving motor coupled to a drive shaft of a vehicle; and
a power split device coupling an output shaft of said internal combustion engine, an output shaft of said multi-phase motor and said drive shaft to one another.

FIG.1

# FIG.2

TR2 →
MRN2 →
Iu,Iv,Iw →

**MOTOR CONTROL PHASE VOLTAGE CALCULATING UNIT** ~32

Vu*,Vv*,Vw* →

**INVERTER DRIVING SIGNAL CONVERTING UNIT** ~34

PWMI1
STP
Ton

**INVERTER** ~14

Iu,Iv,Iw →

**INVERTER FAILURE DETECTING UNIT** ~36

FINV

**SHORT-CIRCUITED PHASE DETECTING UNIT** ~38

DE

Iu,Iv,Iw

~30

**EXTERNAL ECU** ~200

EP 2 058 935 A1

## FIG.3

SHORT-CIRCUIT OF
UPPER ARM OF U-PHASE

## FIG.4

SHORT-CIRCUIT OF
UPPER ARM OF U-PHASE

SHORT-CIRCUIT OF
LOWER ARM OF U-PHASE

## FIG.5

SHORT-CIRCUIT OF
UPPER ARM OF U-PHASE

SHORT-CIRCUIT OF
LOWER ARM OF U-PHASE

## FIG.6

MECHANICAL ANGLE [deg]

## FIG.7

START

S01 — FAILURE OF INVERTER?

NO →

YES

S02 — SUSPENSION OF INVERTER

S03 — DETECTION OF SHORT-CIRCUITED PHASE BY MOTOR CURRENT

S04 — READY-OFF

S05 — STOPPING VEHICLE

S06 — TURNING ON UPPER AND LOWER ARMS OF SHORT-CIRCUITED PHASE

S07 — DISCHARGE OF CAPACITOR C2

END

## INTERNATIONAL SEARCH REPORT

| International application No. |
| --- |
| PCT/JP2007/066712 |

A. CLASSIFICATION OF SUBJECT MATTER
*H02M7/48(2007.01)i*

According to International Patent Classification (IPC) or to both national classification and IPC

B. FIELDS SEARCHED

Minimum documentation searched (classification system followed by classification symbols)
H02M7/48

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2006-87175 A (Toyota Motor Corp.), 30 March, 2006 (30.03.06), Par. Nos. [0013], [0022] to [0036]; Figs. 1 to 4 (Family: none) | 1-5 |
| Y | JP 2003-348856 A (Mitsubishi Electric Corp.), 05 December, 2003 (05.12.03), Par. Nos. [0019] to [0031]; Fig. 1 (Family: none) | 1-5 |
| Y | JP 8-149868 A (Meidensha Corp.), 07 June, 1996 (07.06.96), Par. Nos. [0019] to [0035]; Figs. 1 to 3 (Family: none) | 1-5 |

☒ Further documents are listed in the continuation of Box C.          ☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 November, 2007 (12.11.07) | Date of mailing of the international search report<br>20 November, 2007 (20.11.07) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/066712 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2006-158173 A (Toyota Motor Corp.), 15 June, 2006 (15.06.06), Par. Nos. [0038] to [0041]; Fig. 1 (Family: none) | 5 |
| A | JP 9-163756 A (Toyota Motor Corp.), 20 June, 1997 (20.06.97), Par. Nos. [0004], [0013] to [0015]; Fig. 1 (Family: none) | 1-5 |
| P,A | JP 2007-116790 A (Nissan Motor Co., Ltd.), 10 May, 2007 (10.05.07), Par. Nos. [0036] to [0049]; Figs. 4 to 5 (Family: none) | 1-5 |

Form PCT/ISA/210 (continuation of second sheet) (April 2007)

**EP 2 058 935 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004289903 A